# EUROPÄISCHE PATENTSCHRIFT

(11) **EP 2 288 951 B1**
(45) Veröffentlichungstag und Bekanntmachung des Hinweises auf die Patenterteilung: **23.03.2016**
(21) Anmeldenummer: 09761377.2
(22) Anmeldetag: 19.05.2009
(51) Int. Cl.: G02B 6/44

(54) **ANSCHLUSS-BOX FÜR GLASFASERKABEL UND PANEL**
TERMINATION BOX FOR GLASS FIBER CABLES, AND PANEL
BOÎTIER DE CONNEXION POUR CÂBLE À FIBRES OPTIQUES ET TABLEAU ASSOCIÉ

(30) Priorität: 09.06.2008 DE 102008027381
(43) Veröffentlichungstag der Anmeldung: 02.03.2011
(73) Patentinhaber: Tyco Electronics Services GmbH, 8200 Schaffhausen (CH)
(72) Erfinder: ADOMEIT, Jörg, 12307 Berlin (DE); HARTMANN, Oliver, 14473 Potsdam (DE); HETZER, Ulrich, 12679 Berlin (DE); KOPF, Pia, 13595 Berlin (DE); MÖSSNER, Frank, 12277 Berlin (DE); SIELAFF, Michael, 12359 Berlin (DE)
(74) Vertreter: Patentanwälte Bressel und Partner mbB
(86) Internationale Anmeldenummer: PCT/EP2009/003555
(87) Internationale Veröffentlichungsnummer: WO 2009/149814

(56) Entgegenhaltungen:
- EP-A- 0 557 187
- EP-A- 1 203 974
- DE-A1- 4 119 829
- FR-A- 2 757 644
- US-A- 4 832 436
- US-A- 5 668 911
- US-A- 5 835 657
- US-B1- 6 226 434

## Beschreibung

Die Erfindung betrifft eine Anschluss-Box für Glasfaserkabel.

Derartige Anschluss-Boxen, auch Termination Box genannt, dienen zum Anschließen von Glasfaserkabeln. Hierzu wird beispielsweise ein Glasfaserkabel mit zwei Fasern jeweils mit einem pigtail gespleißt, wobei die Stecker der pigtails jeweils in eine Kupplung gesteckt werden. Über die andere Seite der Kupplung kann dann ein externer Glasfaserstecker zum Abgreifen gesteckt werden.

Die Gehäuse derartiger Anschluss-Boxen weisen üblicherweise ein Unterteil und einen Deckel auf, wobei der Deckel schwenkbar an dem Unterteil angelenkt Ist, wobei die Grundform der Gehäuse rechteckig ist und die Seitenflächen länger als die Stirnflächen sind, wobei das Schwenklager des Deckels an einer Seitenfläche angeordnet ist, so dass der Deckel seitlich aufgeklappt wird.

Derartige Anschluss-Boxen werden typischerweise an der Wand befestigt, wozu die Anschluss-Boxen beispielsweise Öffnungen im Unterteil aufweisen, um die Anschluss-Box zu verschrauben. Allerdings weisen derartige Anschluss-Boxen keine Befestigungsmittel zur Befestigung der Anschluss-Box aus einem 19"-Gestell auf.

Aus der US 5 668 911 ist eine Anschlussbox für Glasfaserkabel bekannt, umfassend ein mindestens zweiteiliges Gehäuse mit einem Unterteil und einem Deckel, wobei der Deckel schwenkbar an dem Unterteil angeordnet ist. Die Anschlussbox umfasst weiter mindestens eine Aufnahme für einen Spleiß und mindestens eine Zuführung für ein Glasfaserkabel.

Aus der DE 41 19 829 A1 ist eine Anschlussbox für Glasfaserkabel bekannt, umfassend ein mindestens zweiteiliges Gehäuse mit einem Unterteil und einem Deckel, wobei der Deckel schwenkbar an dem Unterteil angeordnet ist. Dabei sind die Seitenflächen des Deckels länger als die Stirnflächen des Deckels. Weiter weist die Anschlussbox mindestens eine Aufnahme für einen Spleiß und mindestens eine Zuführung für ein Glasfaserkabel auf, wobei die Zuführung für das Glasfaserkabel seitlich zu einer Seitenfläche des Deckels versetzt in der dem Schwenklager gegenüberliegenden Stirnfläche des Deckels angeordnet ist.

Der Erfindung liegt das technische Problem zugrunde, eine verbesserte Anschluss-Box für Glasfaserkabel zu schaffen.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst die Anschluss-Box für Glasfaserkabel ein mindestens zweiteiliges Gehäuse mit einem Unterteil und einem Deckel, wobei der Deckel schwenkbar an dem Unterteil angeordnet ist, mindestens eine Aufnahme für einen Spleiß, mindestens eine Zuführung für ein Glasfaserkabel und eine Aufnahme für eine Kupplung, wobei die Seitenflächen des Deckels und des Unterteils länger als deren Stirnflächen sind, wobei ein Schwenklager des Deckels an einer Stirnfläche angeordnet ist, so dass der Deckel über die Stirnfläche geschwenkt wird, also nach oben oder unten. Dies hat gegenüber einem seitlichen Schwenken des Deckels den Vorteil, dass bei mehreren benachbarten Anschluss-Boxen der Schwenkvorgang und die nachfolgenden Anschlussarbeiten nicht behindert werden. Vorzugsweise wird der Deckel nach oben geschwenkt.

Dabei ist der Deckel zur Stirnfläche mit dem Schwenklager abgerundet ausgebildet, so dass die Stirnfläche mit dem Schwenklager flacher ist als die gegenüberliegende Stirnfläche.

Weiter ist die Zuführung für das Glasfaserkabel seitlich versetzt in der dem Schwenklager gegenüberliegenden Stirnfläche angeordnet. Weiter sind die Aufnahmen für die Kupplungen in der gleichen Stirnfläche angeordnet, jedoch zur anderen Seite versetzt angeordnet, was eine räumliche Trennung von ankommenden und abgehenden Glasfasern bewirkt, was wiederum die Faserführung in der Anschluss-Box erleichtert.

In einer bevorzugten Ausführungsform ist in der der Zuführung benachbarten Seitenfläche eine weitere Zuführung für Glasfaserkabel. Dies ist relativ einfach technisch realisierbar, da kein Schwenklager die Zuführung behindert.

In einer weiteren bevorzugten Ausführungsform ist in der Unterseite des Unterteils eine Zuführung für Glasfaserkabel.

In einer weiteren bevorzugten Ausführungsform weist der Deckel im aufgeschwenkten Zustand eine Raststellung auf, was ein versehentliches Herunterklappen verhindert.

In einer weiteren bevorzugten Ausführungsform Ist zwischen dem Unterteil und dem Deckel ein schwenkbarer Träger angeordnet, der die Aufnahme oder Aufnahmen für die Spleiße trägt.

Vorzugsweise weist der Träger im aufgeschwenkten Zustand eine Raststellung auf. Prinzipiell ist es auch möglich, dass der Träger ohne Raststellung mit dem Deckel geschwenkt wird und in dessen Raststellung gehalten wird.

Vorzugsweise ist der Träger zum Schwenklager des Deckels abgerundet ausgebildet, was insbesondere die Faserführung und die Anbindung an das Schwenklager vereinfacht.

Die Erfindung wird nachfolgend anhand eines bevorzugten Ausführungsbeispiels näher erläutert. Die Fig. zeigen:
- Fig. 1: eine perspektivische Vorderansicht einer Anschluss-Box,
- Fig. 2: eine perspektivische Unteransicht der Anschluss-Box,
- Fig. 3: eine perspektivische Seitenansicht der Anschluss-Box mit aufgeschwenktem Deckel,
- Fig. 4: eine perspektivische Vorderansicht mit aufgeschwenktem Deckel und Träger,
- Fig. 5: eine perspektivische Draufsicht auf den Träger,
- Fig. 6: eine perspektivische Draufsicht auf ein Unterteil in einer alternativen Ausführungsform,
- Fig. 7: eine perspektivische Unteransicht einer Anschluss-Box mit einem Unterteil gemäß Fig. 6,
- Fig. 8: eine perspektivische Vorderansicht eines Panels zur Aufnahme einer Anschluss-Box,
- Fig. 9: eine perspektivische Vorderansicht des Panels mit aufgenommener Anschluss-Box und
- Fig. 10: eine perspektivische Unteransicht des Panels gemäß Fig. 9.

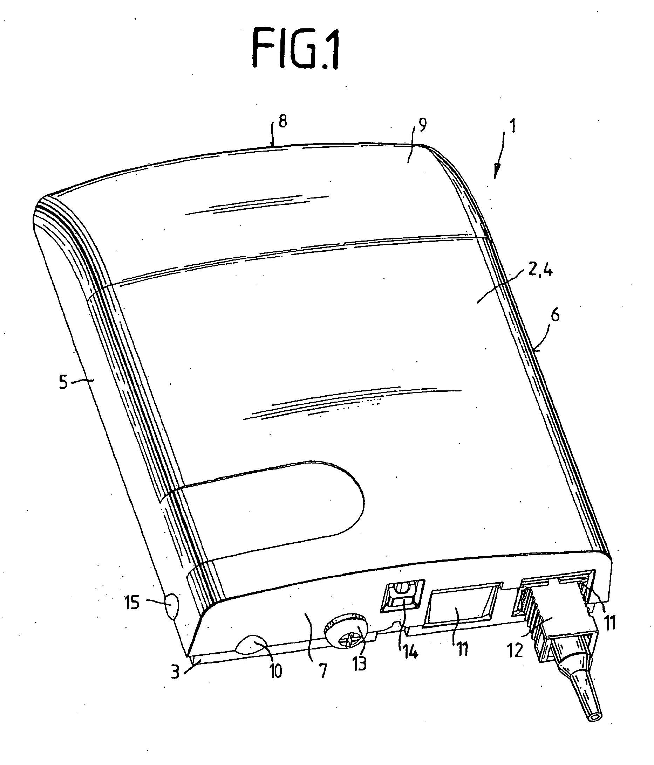

In der Fig. 1 ist eine Anschluss-Box 1 für Glasfaserkabel dargestellt. Die Anschluss-Box 1 umfasst einen Deckel 2 und ein Unterteil 3. Der Deckel 2 weist eine Oberseite 4, zwei Seitenflächen 5, 6 und zwei Stirnflächen 7, 8 auf. Die Seitenflächen 5, 6 sind dabei länger als die Stirnflächen 7, 8. Die Oberseite 4 weist einen abgerundeten Bereich 9 auf, so dass sich die Oberseite 4 in Richtung der Stirnfläche 8 auf das Unterteil 3 zu krümmt und die Stirnfläche 8 nur eine sehr geringe Höhe im Vergleich zur Stirnfläche 7 aufweist. Entsprechend verjüngen sich auch die Seitenflächen 5, 6 in Richtung Stirnfläche 8. Die Stirnfläche 7 weist eine Zuführung 10 für Glasfaserkabel auf, die seitlich versetzt angeordnet ist und relativ tief liegt. Auf der anderen Seite sind zwei Aufnahmen 11 für Kupplungen für Glasfaserstecker 12 angeordnet, wobei in der Darstellung in die rechte Aufnahme 11 ein Glasfaserstecker eingesteckt ist. Weiter ist eine Sicherungsschraube 13 und ein Mittel 14 zur Aufnahme einer Plombe dargestellt. An der Seitenfläche 5 ist eine weitere Zuführung 15 für Glasfaserkabel vorgesehen.

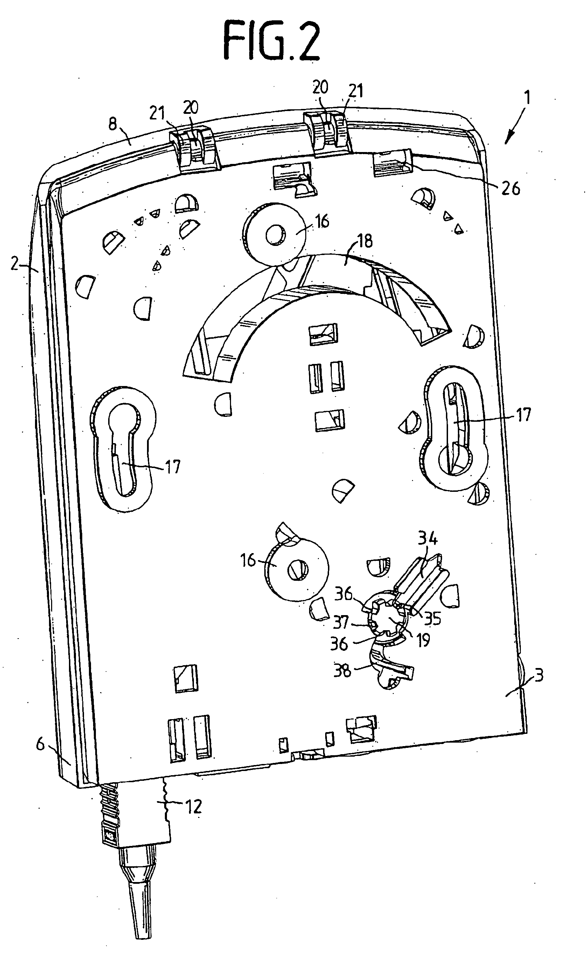

In der Fig. 2 ist eine Unteransicht der Anschluss-Box 1 dargestellt. Das Unterteil 3 weist Öffnungen 16 für Befestigungsmittel zur Wandmontage und Öffnungen 17 für eine Montage auf eine Unterputzdose auf. Weiter weist das Unterteil eine weitere Zuführung 18 für ein Glasfaserkabel aus der Wand auf. Des Weiteren ist eine Zugentlastung 19 sichtbar, die später noch näher erläutert wird. Das Unterteil 3 weist im Bereich der Stirnfläche 8 des Deckels 2 einen Zylinderstift 20 auf, auf den zwei Scharnierelemente 21 geklemmt sind, die am Deckel 2 angeordnet sind. Die Scharnierelemente 21 und der Zylinderstift 20 bilden ein Schwenklager für den Deckel 2, wobei die Scharnierelemente 21 und der Zylinderstift 20 derart ausgebildet sind, dass diese in einer bestimmten Winkellage einrasten. Vorzugsweise ist dieser Winkel größer 90° und kleiner 180°. Weiter weist das Unterteil 3 eine weitere Achse 26 auf, der Bestandteil eines Schwenklagers eines später noch näher erläuterten Trägers ist.

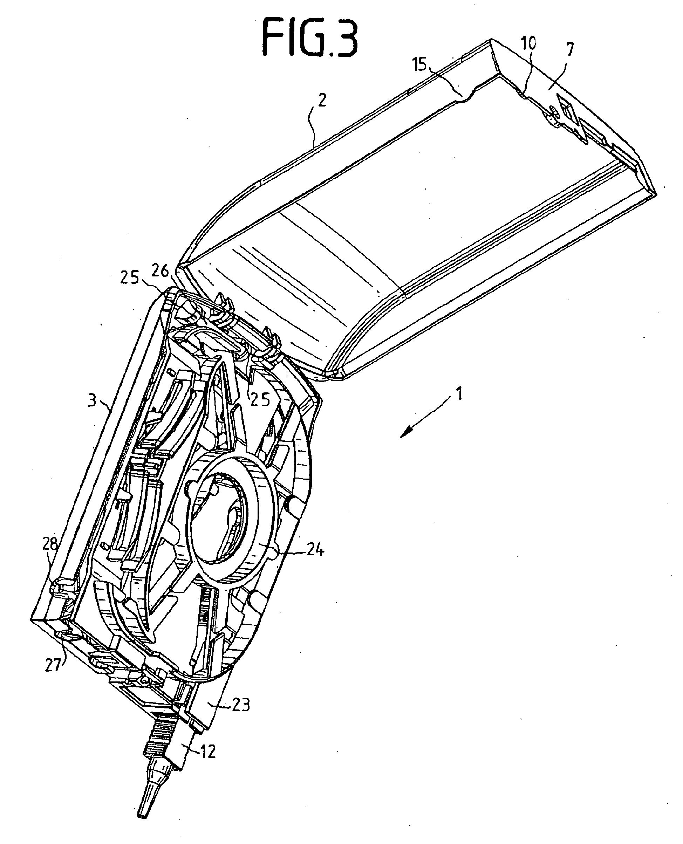

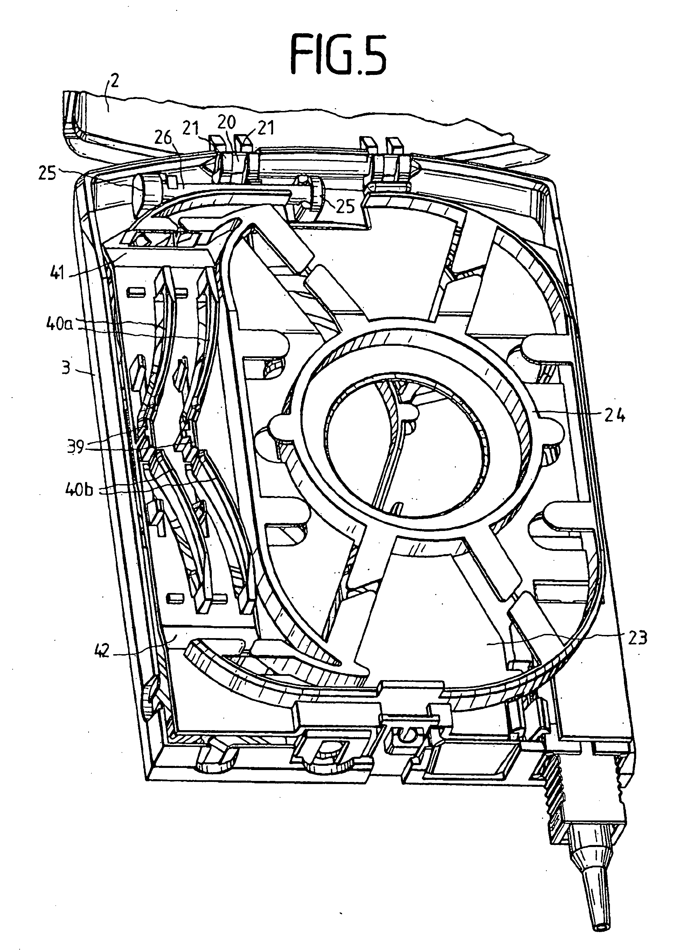

In der Fig. 3 ist die Anschluss-Box 1 mit aufgeschwenktem Deckel 2 in der Raststellung dargestellt. Auf dem Unterteil 3 ist ein Träger 23 angeordnet, der einen Wickelzylinder 24 für Überlängen von Glasfaseradern und zwei Aufnahmen für Spleiße umfasst, wobei der Aufbau der Aufnahmen später im Zusammenhang mit Fig. 5 näher erläutert wird. Der Träger 23 ist über zwei Scharnierelemente 25 mit der Achse 26 des Unterteils 3 verbunden, wobei Scharnierelemente 25 und Achse 26 ein Schwenklager bilden. Die Scharnierelemente 25 und/oder die Achse 26 sind dabei wieder derart ausgebildet, dass diese eine Raststellung beim Schwenken bilden. Der Träger 23 ist dabei abgerundet ausgebildet, so dass der Träger 23 zur Achse 26 hin an Bauhöhe abnimmt. Das Unterteil 3 weist weiter eine Öffnung 27 und eine Öffnung 28 auf, die fluchtend zu den Zuführungen 10 bzw. 15 sind.

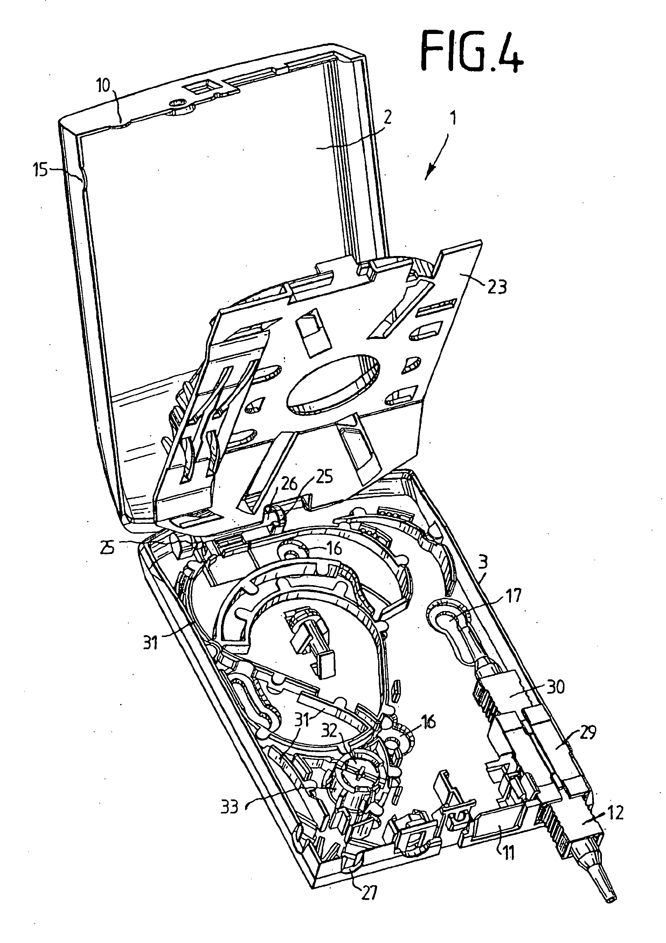

In der Fig. 4 ist schließlich die Anschluss-Box 1 mit aufgeschwenktem Träger 23 dargestellt, wobei hier der Winkel für die Raststellung kleiner als der Winkel für die Raststellung des Deckels 2 ist. Der Winkel für die Raststellung des Trägers 23 beträgt ca. 90°. Im Unterteil 3 ist eine leere Aufnahme 11 für eine Kupplung dargestellt sowie eine Aufnahme 11 mit Kupplung 29 mit Glasfaserstecker 12 sowie einem Stecker 30 eines nicht näher dargestellten pigtails. Weiter sind verschiedene Führungen 31 dargestellt, über die ein Glasfaserkabel, das zuvor über die Zuführungen 10 bzw. 15 in das Unterteil 3 geführt wurde, in Richtung der Achse 26 geführt werden kann und von dort nach oben zum Träger 23, wo die Reservelänge auf den Wickelzylinder 24 gedreht wird und die Glasfaser schließlich mit einem pigtail gespleißt wird. Die Zugentlastung 19 dient zur Befestigung von Kevlarfasern der zugeführten Glasfaserkabel. Die Zugentlastung 19 umfasst dabei ein inneres Teil 32 und ein äußeres Teil 33, wobei das innere Teil 32 drehbar in dem äußeren Teil gelagert ist. Das innere Teil 32 weist einen Schlitz auf, unter dem parallel eine zylindrische Bohrung verläuft, wobei Schlitz und Bohrung miteinander verbunden sind, also die Bohrung im Bereich des Schlitzes offen ist. Die Zugentlastung 19 weist weiter Rastmittel auf, um das innere und äußere Teil 32, 33 nach Drehung miteinander zu verrasten, um ein selbständiges Zurückdrehen zu verhindern. Diese Rastmittel sind in Fig. 2 dargestellt, nämlich ein Rastarm 34 mit Rastnase 35 sowie Rastnasen 36, zwischen denen sich Rastaufnahmen 37 bilden, in die dann die Rastnase 35 eingreift. Die Rastnasen 36 und die Rastaufnahmen 37 sind dabei an der Unterseite des inneren Teils 32 angeordnet. Weiter ist ein Fixiermittel 38 in Form eines federnden Armes vorhanden, das die Kevlarfasern gegen einen Wickelbereich des inneren Teils 32 drückt. Die Kevlarfasern werden dann in den Schlitz eingelegt und nach unten in die Bohrung gepresst. Anschließend wird das innere Teil 32 gedreht, so dass sich die Kevlarfasern um einen Wickelbereich des inneren Teils aufwickeln. Das Kabel wird dabei an einem Anschlag fixiert, so dass es zu einer Selbsthemmung kommt. Der Anschlag wird dabei vorzugsweise durch zwei Flächen gebildet, zwischen denen die Ader des Kabels durchgeführt wird, wobei der Mantel des Kabels am Anschlag anschlägt.

In der Fig. 5 ist der Träger 23 im heruntergeklappten Zustand dargestellt. Der Träger 23 weist zwei Aufnahmen für Spleiße auf, wobei jede Aufnahme mindestens einen Steg 39 und zwei Federarme 40a, b aufweist. Dabei ist der rechte Steg 39 T-förmig ausgebildet, um die Stabilität zu erhöhen. Die Federarme 40a, b sind an Wandelementen 41, 42 des Trägers 23 angebunden. Die Federarme 40a unterschiedlicher Aufnahmen sind zueinander parallel. Ebenso sind die Federarme 40b zueinander parallel. Der Steg 39 der rechten Aufnahme liegt dabei vorzugsweise in der gleichen Linie wie die Anbindung der Federarme 40a, b der linken Aufnahme an den Wandelementen 41, 42. Dies ermöglicht einen sehr kompakten Aufbau der Aufnahmen. Der eigentliche Spleiß wird zwischen dem Steg 39 und den beiden Federarmen 40a, b festgeklemmt. Zum leichteren Einlegen der Spleiße ist der Steg 39 nicht so hoch wie die Federarme 40a, b ausgebildet. Beispielsweise sind die Federarme 40a, b gerade ausgebildet. Insbesondere bei der Verwendung sehr kleiner Spleiße kann es jedoch vorteilhaft sein, die Federarme 40a, b gewölbt auszubilden, wie in Fig. 5 dargestellt. Hierdurch wird die Gefahr reduziert, dass die Spleiße durch die Freischnitte der Federarme 40a, b rutschen, wobei die benachbarten Federarme 40a, b parallel zueinander gewölbt sind.

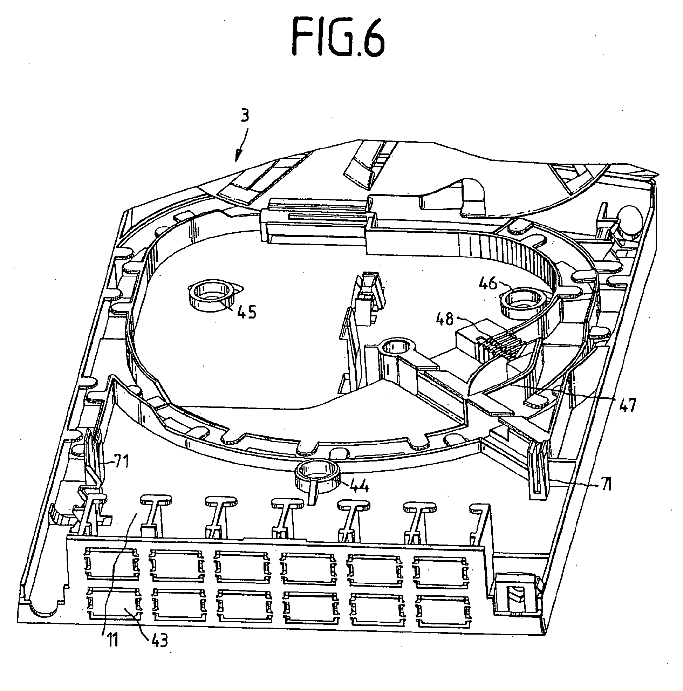

In der Fig. 6 ist eine alternative Ausführungsform des Unterteils 3 dargestellt, das zwölf Aufnahmen 11 für Kupplungen aufweist, wobei diese paarweise übereinander angeordnet sind. Weiter weist das Unterteil 3 Abdeckungen 43 auf, die mit Sollbruchstellen ausgebildet sind und unbenutzte Aufnahmen 11 schützen. Weiter weist das Unterteil zwei Halteelemente 71 auf, in denen der Träger 23 fixiert wird. Weiter sind Befestigungselemente 44, 45, 46 zur Wandbefestigung vorgesehen, die mit Öffnungen 16 ausgebildet sind. Des Weiteren ist das Unterteil 3 mit einem Führungselement 47 und einem Fixierelement 48 ausgebildet. Hierdurch können sowohl Adern als auch Fasern im Unterteil 3 geführt werden. Adern werden dabei rechts am Führungselement 47 vorbeigeführt, wobei Fasern links vorbeigeführt und im Fixierelement 48 geklemmt werden, um anschließend weitergeführt zu werden.

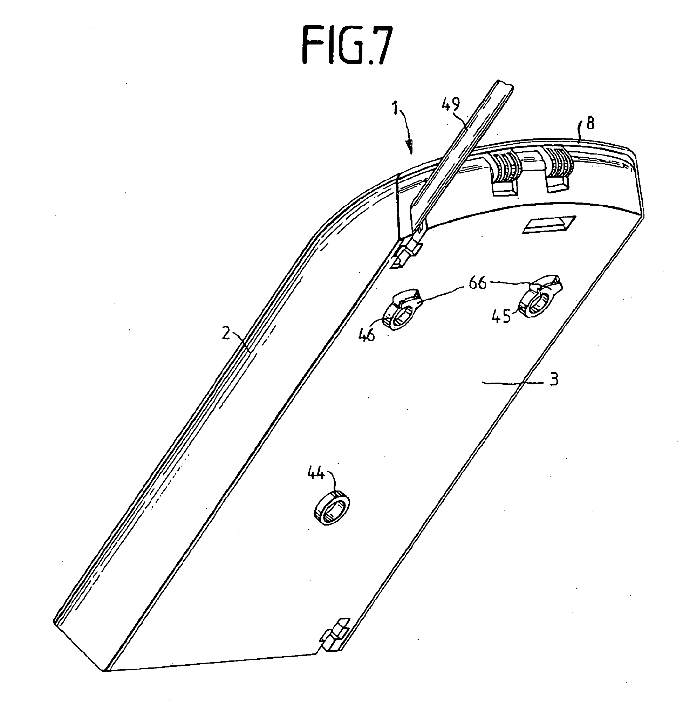

In der Fig. 7 ist die Anschluss-Box 1 mit dem Unterteil 3 vereinfacht dargestellt, wobei einige der Öffnungen und Freimachungen nicht dargestellt sind. Weiter ist ein Glasfaserkabel 49 gezeigt, das von der Stirnfläche 8 in die Anschluss-Box 1 geführt ist. Die Befestigungselemente 45, 46 sind dabei mit Laschen 66 ausgebildet.

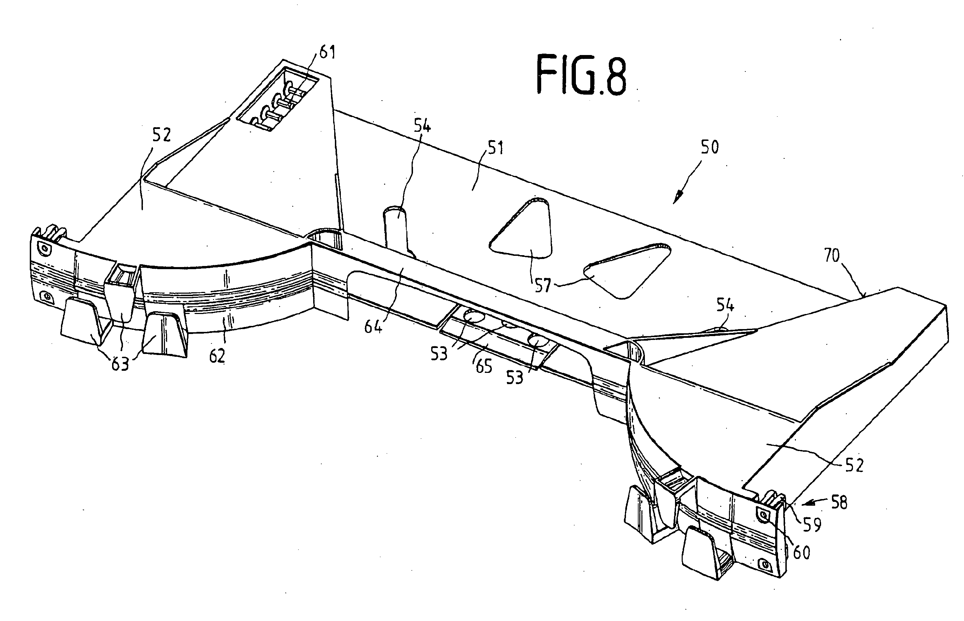

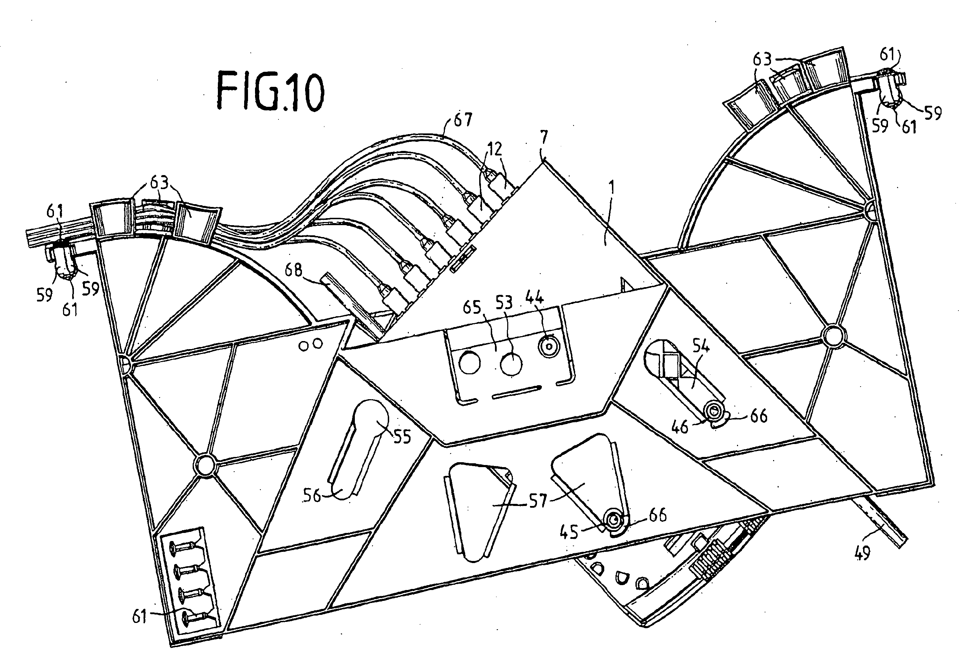

In der Fig. 8 ist ein Panel 50 für eine Anschluss-Box 1 dargestellt. Das Panel 50 umfasst eine Trägerplatte 51 und zwei Seitenteile 52. Die Trägerplatte 51 umfasst eine federnde Lasche 65 mit drei Öffnungen 53, wobei die mittlere Öffnung 53 etwas nach hinten versetzt angeordnet ist. Weiter weist die Trägerplatte 51 zwei Öffnungen 54 auf, die jeweils einen kreisrunden Teil 55 mit einer Verlängerung 56 aufweisen, wobei die Verlängerungen 56 jeweils schräg nach hinten zu den Seitenteilen 52 verlaufen (siehe Fig. 10). Schließlich weist die Trägerplatte 51 zwei dreieckförmige Öffnungen 57 auf, deren Ecken abgerundet sind. An den Seitenteilen 52 sind Befestigungsmittel 58 zum Rasten auf ein Gestell angeordnet. Die Befestigungsmittel 58 umfassen zwei Laschen 59, die zum Entrasten aufeinander zugedrückt werden müssen. Um ein versehentliches Entrasten zu verhindern, sind Bohrungen 60 vorgesehen, in die jeweils ein Sicherungsstift 61 gesteckt werden kann, der ein zusammendrücken verhindert. Die Sicherungsstifte 61 werden zusammen mit dem Panel 50 gespritzt und später herausgebrochen. Die Seitenteile 52 weisen weiter Abrundungen 62 mit Kabel- bzw. Aderführungen 63 auf. Zwischen den beiden Seitenteilen 52 verläuft parallel zur Trägerplatte 51 ein Steg 64.

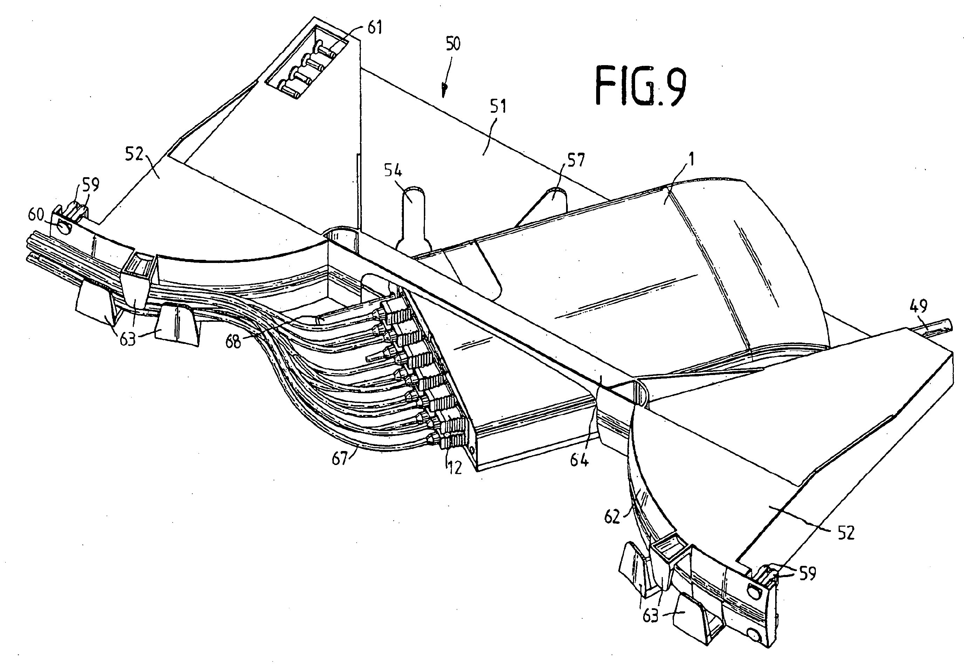

In der Fig. 9 ist das Panel 50 mit eingebauter Anschluss-Box 1 dargestellt. Hierzu wird die Anschluss-Box 1 unter dem Steg 64 geschoben und das Befestigungselement 45 in die rechte Öffnung 57 und das Befestigungselement 46 in die rechte Öffnung 54 gedrückt. Anschließend wird die Anschluss-Box 1 nach hinten entlang der Kante 70 geschoben, so dass Laschen 66 der Befestigungselemente 45, 46 sich über die Trägerplatte 51 schieben. Daraufhin wird dann das Befestigungselement 44 in die Öffnung 53 gedrückt. Hierdurch ist die Anschluss-Box 1 sicher an der Trägerplatte 51 befestigt, wobei der Endzustand der Befestigungselemente am besten in Fig. 10 zu erkennen ist. Soll die Anschluss-Box 1 in einer mittigen Position angeordnet werden, so werden die beiden Befestigungselemente 45, 46 in die beiden Öffnungen 57 eingelegt und nach hinten geschoben, wobei dann das Befestigungselem, ent 44 in die mittlere Öffnung 53 eingedrückt wird. Schließlich kann die Anschluss-Box 1 noch in eine dritte Position an dem linken Seitenteil angeordnet werden, wobei dann die Befestigung spiegelverkehrt zur dargestellten Befestigung in Fig. 10 ist. Die Befestigung über drei Befestigungselemente 44, 45, 46 weist dabei die Vorteile einer Dreipunktlagerung auf. Die federnde Lasche 65 ist an den Seitenkanten und teilweise im hinteren Bereich freigeschnitten, so dass sich eine ausreichende Federwirkung einstellt, wobei die hintere Anbindung an die Trägerplatte 51 durch zwei Verbindungsstege erhalten bleibt, um eine ausreichende Stabilität der Lasche zu gewährleisten. Weiter ist in Fig. 9 bzw. 10 dargestellt, wie Glasfaserstecker 12 in die Kupplungen der Anschluss-Box 1 eingesteckt sind, wobei die Glasfaserkabel 67 der Glasfaserstecker 12 in den Kabelführungen 63 entlang der Abrundung 62 geführt sind. Des Weiteren ist in den Fig. 9 und 10 ein weiteres Glasfaserkabel 68 dargestellt, das von der Frontseite 7 der Anschluss-Box 1 zugeführt wird.

### Bezugszeichenliste

- 1: Anschluss-Box
- 2: Deckel
- 3: Unterteil
- 4: Oberseite
- 5, 6: Seitenflächen
- 7, 8: Stirnflächen
- 9: abgerundeter Bereich
- 10: Zuführung
- 11: Aufnahmen
- 12: Glasfaserstecker
- 13: Sicherungsschraube
- 14: Mittel
- 15: Zuführung
- 16: Öffnungen
- 17: Öffnungen
- 18: Zuführung
- 19: Zugentlastung
- 20: Zylinderstift
- 21: Scharnierelemente
- 23: Träger
- 24: Wickelzylinder
- 25: Scharnierelemente
- 26: Achse
- 27: Öffnung
- 28: Öffnung
- 29: Kupplung
- 30: Stecker
- 31: Führungen
- 32: innerer Teil
- 33: äußerer Teil
- 34: Rastarm
- 35: Rastnase
- 36: Rastnasen
- 37: Rastaufnahmen
- 38: Fixiermittel
- 39: Steg
- 40a, b: Federarme
- 41, 42: Wandelemente
- 43: Abdeckungen
- 44, 45, 46: Befestigungselemente
- 47: Führungselement
- 48: Fixierelement
- 49: Glasfaserkabel
- 50: Panel
- 51: Trägerplatte
- 52: Seitenteile
- 53, 54: Öffnungen
- 55: kreisrundes Teil
- 56: Verlängerung
- 57: Öffnungen
- 58: Befestigungsmittel
- 59: Laschen
- 60: Bohrungen
- 61: Sicherungsstift
- 62: Abrundungen
- 63: Aderführungen
- 64: Steg
- 65: Lasche
- 66: Lasche
- 67, 68: Glasfaserkabel
- 70: Kante
- 71: Halteelement

## Patentansprüche

1. Anschluss-Box (1) für Glasfaserkabel, umfassend ein mindestens zweiteiliges Gehäuse mit einem Unterteil (3) und einem Deckel (2), wobei der Deckel (2) schwenkbar an dem Unterteil (3) angeordnet ist und das Schwenklager des Deckels (2) an einer Stirnfläche (8) des Deckels (2) angeordnet ist, wobei die Seitenflächen (5, 6) des Deckels (2) länger als die Stirnflächen (7, 8) des Deckels (2) sind, mindestens eine Aufnahme für einen Spleiß und mindestens eine Zuführung (10) für ein Glasfaserkabel, wobei
die Zuführung (10) für das Glasfaserkabel seitlich zu einer Seitenfläche (5) des Deckels (2) versetzt in der dem Schwenklager gegenüberliegenden Stirnfläche (7) des Deckels (2) angeordnet ist, wobei seitlich versetzt zu der anderen Seitenfläche (6) des Deckels (2) mindestens eine Aufnahme (11) für eine Kupplung in dem Unterteil (3) angeordnet Ist, wobei
der Deckel (2) zur Stirnfläche (8) mit dem Schwenklager abgerundet ausgebildet ist, so dass die Stirnfläche (8) mit dem Schwenklager flacher ist als die gegenüberliegende Stirnfläche (7),

2. Anschluss-Box nach Anspruch 1, **dadurch gekennzeichnet, dass** in der der Zuführung (10) benachbarten Seitenfläche (5) eine weitere Zuführung (15) für Glasfaserkabel ist.

3. Anschluss-Box nach einem der vorangegangenen Ansprüche, **dadurch gekennzeichnet, dass** in der Unterseite des Unterteils (3) eine Zuführung (18) für Glasfaserkabel ist.

4. Anschluss-Box nach einem der vorangegangenen Ansprüche, **dadurch gekennzeichnet, dass** der Deckel (2) im aufgeschwenkten Zustand eine Raststellung aufweist.

5. Anschluss-Box nach einem der vorangegangenen Ansprüche, **dadurch gekennzeichnet, dass** zwischen dem Unterteil (3) und dem Deckel (2) ein schwenkbarer Träger (23) angeordnet ist, der die Aufnahme oder Aufnahmen für die Spleiße trägt.

6. Anschluss-Box nach Anspruch 5, **dadurch gekennzeichnet, dass** der Träger (23) im aufgeschwenkten Zustand eine Raststellung aufweist.

7. Anschluss-Box nach Anspruch 5 oder 6, **dadurch gekennzeichnet, dass** der Träger (23) zum Schwenklager des Deckels (2) abgerundet ausgebildet ist.

## Claims

1. A terminal box (1) for fiberoptic cables, comprising an at least two-part housing with a lower part (3) and a cover (2), the cover (2) being arranged pivotably on the lower part (3), wherein a pivot bearing of the cover (2) is arranged on an end face (8) of the cover (2), the side faces (5, 6) of the cover being longer than the end faces (7, 8) of the cover (2), at least one receptacle for a splice and at least one feed (10) for a fiberoptic cable, wherein
the feed (10) for the fiberoptic cable is arranged laterally offset in the end face (7) opposite the pivot bearing to one side face (5), wherein at least one receptacle for a coupling is arranged in the lower part (3) in the same end face (7), but arranged offset towards the other side face (6), wherein
the cover (2) is designed to be rounded off towards the end face (8) with the pivot bearing, with the result that the end face (8) with the pivot bearing is flatter than the opposite end face (7).

2. The terminal box as claimed in claim 1, wherein a further feed (15) for fiberoptic cables is in the side face (5) adjacent to the feed.

3. The terminal box as claimed in one of the preceding claims, wherein a feed (18) for fiberoptic cables is in the lower side of the lower part (3).

4. The terminal box as claimed in one of the preceding claims, wherein the cover (2) in the pivoted-up state has a latching position.

5. The terminal box as claimed in one of the preceding claims, wherein a pivotable carrier (23) is arranged between the lower part (3) and the cover (2) and carries the receptacle or receptacles for the splices.

6. The terminal box as claimed in claim 5, wherein the carrier (23) in the pivoted-up state has a latching position.

7. The terminal box as claimed in claim 5 or 6, wherein the carrier (23) is designed to be rounded off towards the pivot bearing of the cover (2).

## Revendications

1. Boîtier de connexion (1) pour câble à fibre optique, comprenant un boîtier en deux parties au moins avec une partie inférieure (3) et un couvercle (2), le couvercle (2) étant disposé de manière pivotante sur la partie inférieure (3) et le palier pivotant du couvercle (2) étant disposé au niveau d'une face frontale (8) du couvercle (2), les faces latérales (5, 6) du couvercle (2) étant plus longues que les faces frontales (7, 8) du couvercle (2), au moins un logement pour une épissure et au moins un guide d'amenée (10) pour un câble à fibre optique,
le guide d'amenée (10) pour le câble à fibre optique étant disposé latéralement par rapport à une face latérale (5) du couvercle (2) dans la face frontale (7) du couvercle (2) opposée au palier pivotant, au moins un logement (11) pour un accouplement dans la partie inférieure (3) étant disposé de manière décalée latéralement par rapport à l'autre face latérale (6) du couvercle (2),
le couvercle (2) étant réalisé de manière arrondie vers la face frontale (8) avec le palier pivotant, de telle sorte que la face frontale (8) avec le palier pivotant soit plus plate que la face frontale opposée (7).

2. Boîtier de connexion selon la revendication 1, **caractérisé en ce que** dans la face latérale (5) adjacente au guide d'amenée (10) est prévu un guide d'amenée supplémentaire (15) pour câble à fibre optique.

3. Boîtier de connexion selon l'une quelconque des revendications précédentes, **caractérisé en ce qu'**un guide d'amenée (18) pour câble à fibre optique est prévu dans le côté inférieur de la partie inférieure (3).

4. Boîtier de connexion selon l'une quelconque des revendications précédentes, **caractérisé en ce que** le couvercle (2) présente une position d'encliquetage dans l'état ouvert par pivotement.

5. Boîtier de connexion selon l'une quelconque des revendications précédentes, **caractérisé en ce qu'**un support pivotant (23) est disposé entre la partie inférieure (3) et le couvercle (2), lequel porte le logement ou des logements pour les épissures.

6. Boîtier de connexion selon la revendication 5, **caractérisé en ce que** le support (23) présente une position d'encliquetage dans l'état ouvert par pivotement.

7. Boîtier de connexion selon la revendication 5 ou 6, **caractérisé en ce que** le support (23) est réalisé sous forme arrondie par rapport au palier pivotant du couvercle (2).
